Europäisches Patentamt

European Patent Office

Office européen des brevets

(11) Veröffentlichungsnummer : **0 179 974**
**B1**

(12) **EUROPÄISCHE PATENTSCHRIFT**

(45) Veröffentlichungstag der Patentschrift :
02.03.88

(51) Int. Cl.⁴ : **C 08 L 23/02, C 08 J 5/18**

(21) Anmeldenummer : 85103758.0

(22) Anmeldetag : 28.03.85

(54) **Mischungszusammensetzung für die Herstellung einer tiefgezogenen Folie.**

(30) Priorität : 27.10.84 DE 3439479

(43) Veröffentlichungstag der Anmeldung :
07.05.86 Patentblatt 86/19

(45) Bekanntmachung des Hinweises auf die Patenterteilung : 02.03.88 Patentblatt 88/09

(84) Benannte Vertragsstaaten :
AT BE CH DE FR GB IT LI NL SE

(56) Entgegenhaltungen :
CH-A- 608 742
DE-A- 3 246 484
GB-A- 1 493 673

(73) Patentinhaber : Firma Carl Freudenberg
Höhnerweg 4
D-6940 Weinheim/Bergstrasse (DE)

(72) Erfinder : Scholz, Hans Günther, Dr.
Lönsstrasse 20
D-6940 Weinheim (DE)
Erfinder : Graab, Gerhard, Dr.
Rüsselsheimer Strasse 5
D-6800 Mannheim (DE)
Erfinder : Grünhag, Helmut
Königshütter Strasse 11
D-6940 Hemsbach (DE)

(74) Vertreter : Weissenfeld-Richters, Helga, Dr.
Höhnerweg 2
D-6940 Weinheim/Bergstrasse (DE)

## Beschreibung

Die Erfindung betrifft eine Mischungszusammensetzung für die Herstellung einer tiefgezogenen Folie, insbesondere der tiefgezogenen Abdeckschicht des Armaturenbrettes für ein Kraftfahrzeug.

Folien der vorgenannten Art werden beispielsweise in der Zeitschrift Kunststoffe 68 (1978) auf den Seiten 666 und 667 erwähnt. Sie bestehen aus einer Mischung aus Acrylnitril-Butadien-Styrol-Kautschuk und PVC und gelangen nach einer vorausgegangenen Vakuumumformung in einem Abstand von einem mit dem Kraftfahrzeug verbundenen Träger zur Anwendung, wobei der Zwischenraum zwischen beiden Teilen mit halbhartem Polyurethan-Schaumstoff ausgefüllt ist, der zugleich der Abpolsterung der Folie dient. Die Folie selbst weist durch einen Gehalt an niedermolekularen Substanzen, beispielsweise an Weichmachern, eine gute Nachgiebigkeit auf, wodurch die Polsterwirkung der Hinterschäumung voll zum Tragen kommt. Entsprechende niedermolekulare Substanzen lassen sich indessen nicht fest in der Folie einbinden, sondern sie neigen insbesondere bei höheren Temperaturen zum Auswandern in Richtung der Oberfläche, was zu Verfärbungen und gegebenenfalls zu einem Beschlagen der Windschutzscheibe führen kann. Beides ist wenig erwünscht und wird ebenso beanstandet, wie die sich feucht und kalt anfühlende Oberfläche.

Die Bestrebungen der Automobilindustrie, die Luftwiderstandsbeiwerte moderner Fahrzeuge ständig weiter zu senken, führen zu immer flacher geneigten Windschutzscheiben. Dadurch wird bei Sonneneinstrahlung das Wageninnere stärker aufgeheizt als bisher, und an der Oberfläche der Armaturenbretter können Temperaturen bis ca. 120 °C gemessen werden. Dadurch tritt bei den vorstehend beschriebenen Folien eine als memory-Effekt bezeichnete Wirkung auf, die dazu führt, daß sich die vakuumgeformte Folie in den Ecken scharfkantig begrenzter Einbuchtungen von der Hinterschäumung löst und ihre ursprünglich ebene Gestalt wieder anzunehmen versucht. Einbuchtungen der genannten Art werden beispielsweise durch auf der Oberseite des Armaturenbrettes angeordneten Ablagefächer gebildet. Entsprechende Rückformungen sind daher augenfällig und schon aus diesem Grunde außerordentlich störend.

Desweiteren führen entsprechende Temperaturen häufig zu einer Rückbildung der aus optischen Gründen in die Oberfläche eingeprägten Narbung. Diese wird flacher und kann schließlich einen kunststoffartigen Glanz annehmen. Die Verwendung von Folien der vorstehend angesprochenen Zusammensetzung ist daher in bezug auf die Verkleidung eines Armaturenbrettes in einem modernen Kraftfahrzeug außerordentlich problematisch.

Der Erfindung liegt demgemäß die Aufgabe zugrunde, eine kostengünstige Mischung zur Erzeugung einer tiefziehbaren Folie zu zeigen, die sich durch erhebliche Vorteile von der vorstehend beschriebenen Ausführung unterscheidet. Die unter Verwendung der vorgeschlagenen Mischung erhältlichen Folien sollen sich insbesondere bei einer guten Temperaturbeständigkeit bis zu 140 °C durch ein günstiges Tiefziehverhalten und eine guten Narbenbeständigkeit auszeichnen sowie durch einen gleichbleibend weichen und trockenen Griff.

Diese Aufgabe wird erfindungsgemäß mit den kennzeichnenden Merkmalen des Patentanspruches gelöst.

Die erfindungsgemäß vorgeschlage Mischungszusammensetzung weist als Hauptbestandteil eine Kautschukmatrix auf, die durch Modifikation mit Polyolefinen, vorzugsweise Polypropylen zu der gewünschten Härte gebracht wird. Als Kautschuk werden insbesondere Ethylen-Propylen-Copolymere oder Ethylen-Propylen-Dien-Copolymere verwendet, bevorzugt solche, die hergestellt sind aus :

60-80 Gew.-% Ethylen
10-38 Gew.-% Propylen
und gegebenenfalls
2-10 Gew.-% einer der Terkomponenten Ethyliden-norbornen oder 1,4-Hexadien

deren Mooney-Viskositäten ML 1 + 4/100 größer als 50 sind.

Als Polypropylen-Typen werden solche mit einem Schmelzindex von 4 g/min, gemessen bei 190 °C unter einer Belastung von 5 kg nach DIN 53 735, eingesetzt. Zur weiteren Modifizierung z. B. zur Verbesserung des Weißbruchverhaltens bei Biegebeanspruchung, dient der Gehalt an Polyphenylenoxid ; die Verträglichkeit aller genannten Komponenten untereinander wird durch den Gehalt an Styrol-Ethylen-Butylen-Styrol-Dreiblockcopolymerisat verbessert. Als Styrol-Ethylen-Butylen-Styrol-Dreiblockcopolymer gelangt ein solches, das eine im Brookfield-Viskosimeter gemessene Lösungsviskosität der 20 %-igen Lösung in Toluol von 500 bis 600 mPa·s (cps) zur Anwendung.

Zweckmäßig werden die genannten Stoffe in der Schmelze in einem gleichsinnig laufenden oder in einem gegenläufig drehenden Zweiwellenextruder bei Temperaturen von 230 bis 240 °C unter Anwendung von Scherenergie gemischt und mit einem Einwellenextruder über eine Breitschlitzdüse ausgetragen. Die so erhaltene Folie wird zweckmäßigerweise unmittelbar anschließend in ein Abzugswerk überführt, das eine Prägewalze zur Narbung der Oberfläche enthält. Eine Elektronenstrahlbehandlung kann sich anschließen und führt zu einer Verbesserung der Narbenbeständigkeit insbesondere während des nachfolgenden Tiefziehvorganges. Die aufgenommene Dosisleistung soll ca. 50 k Gy (5 Mrad) betragen.

Die erhaltenen Folien können ähnlich wie eingangs beschriebene Ausführungen unter Anwendung der bekannten Aggregate und Verfahren verarbeitet werden. Ihre Verwendung bedingt daher keine grundlegenden Umstellungen oder Mehrkosten beim Verarbeiter. Sie bietet sich als hochwertiger Ersatzstoff für die bekannten Ausführungen an.

**Patentansprüche**

1. Mischungszusammensetzung für die Herstellung einer tiefgezogenen Folie, insbesondere der tiefgezogenen Abdeckschicht des Armaturenbrettes für ein Kraftfahrzeug, gekennzeichnet neben einem üblichen Gehalt an Lichtschutzmitteln, Pigmenten, Füllstoffen, Antistatika und/oder Gleitmitteln durch die folgenden Inhaltsstoffe :

1. 25 bis 35 Gew.-% Ethylen-Propylen-Dien-Terpolymer
2. 29 bis 45 Gew.-% Polyolefin
3. 5 bis 19 Gew.-% Polyphenylenoxid
4. 5 bis 12 Gew.-% Styrol-Ethylen-Butylen-Styrol-Blockcopolymer
wobei die Gewichtsanteile der Komponenten 1) bis 4) auf den Gesamtgehalt an Komponenten 1) bis 4) bezogen sind.

2. Mischungszusammensetzung nach Anspruch 1, dadurch gekennzeichnet, daß als Polyolefin ein Polypropylen enthalten ist.

**Claims**

1. A mixture composition for the production of a thermoformed sheet, especially the thermoformed covering layer of the dashboard of a motor vehicle, characterized in that in addition to the conventional content of light stabilizers, pigments, fillers, antistatic agents and/or lubricants the composition contains the following :

1. 25 to 35 % by weight of ethylene-propylene-diene terpolymer,
2. 29 to 45 % by weight of polyolefin,
3. 5 to 19 % by weight of polyphenylene oxide and
4. 5 to 12 % by weight of styrene-ethylenebutylene-styrene block copolymer,
the proportions by weight of components 1) to 4) being expressed relative to the total content of components 1) to 4).

2. A mixture composition according to Claim 1, characterized in that the polyolefin present is a polypropylene.

**Revendications**

1. Composition de mélange pour la fabrication d'une feuille emboutie, en particulier, pour la fabrication de la couche de recouvrement emboutie du tableau de bord d'un véhicule automobile, caractérisée en ce que, outre une teneur habituelle en agents de protection contre la lumière, en pigments, en charges, en agents antistatiques et/ou en lubrifiants, elle comporte les ingrédients suivants :

1. 25 à 35% en poids d'un terpolymère d'éthylène/propylène/diène
2. 29 à 45% en poids d'une polyoléfine
3. 5 à 19% en poids d'oxyde de polyphénylène
4. 5 à 12% en poids d'un copolymère en blocs de styrène/éthylène/butylène/styrène, les fractions pondérales des composants 1) à 4) se rapportant à la teneur totale en composants 1) à 4).

2. Composition de mélange selon la revendication 1, caractérisée en ce que, comme polyoléfine, elle contient un polypropylène.